# EUROPÄISCHE PATENTSCHRIFT

(11) **EP 1 982 668 B1**
(45) Veröffentlichungstag und Bekanntmachung des Hinweises auf die Patenterteilung: **22.06.2011**
(21) Anmeldenummer: 08007019.6
(22) Anmeldetag: 09.04.2008
(51) Int. Cl.: A61C 1/05, A61C 1/08, A61C 1/12

(54) **Fluidbetriebenes medizinisches, insbesondere dentales, Handgriffelement**
Fluid-operated medical, in particular dental, hand-piece
Pièce à main médicale, en particulier dentaire, actionnée hydrauliquement

(30) Priorität: 20.04.2007 EP 07008056
(43) Veröffentlichungstag der Anmeldung: 22.10.2008
(60) Teilanmeldung: 10174848.1
(73) Patentinhaber: W & H Dentalwerk Bürmoos GmbH, 5111 Bürmoos (AT)
(72) Erfinder: Schmiedlechner, Karl, 5121 Ostermiething (AT); Rauchenzauner, Stephan, Singapure 59674 (SG)

(56) Entgegenhaltungen:
- WO-A-01/12095
- GB-A- 1 371 525
- US-A- 4 725 232
- US-A- 5 800 172

## Beschreibung

Die Erfindung betrifft ein fluidbetriebenes medizinisches, insbesondere dentales, Handgriffelement nach dem Oberbegriff des Anspruchs 1.

Aus der Patentschrift US 5,800,172 ist ein Turbinenhandstück bekannt, bei dem das mit Druckluft betriebene Laufrad, das das Werkzeug in Rotation versetzt, auch als Teil eines elektromechanischen Wandlers verwendet wird, der Strom für eine im Handstückkopf vorgesehene Lichtquelle erzeugt.

Der Nachteil dieses Turbinenhandstücks ist, dass während des Betriebs die Drehzahl des Laufrades und somit auch die Leistungserzeugung des Generators ständig schwanken. Derartige Schwankungen werden durch unterschiedliche Belastungen des Turbinenhandstücks hervorgerufen, zum Beispiel wenn der Anwender das mit dem Laufrad verbundene Werkzeug auf das zu bearbeitende Objekt aufsetzt oder wenn er gegebenenfalls über das Handstück Druck auf das zu bearbeitende Objekt ausübt. Die veränderliche Leistungserzeugung und -abgabe des Generators führt im Weiteren zu einer ständig schwankenden Lichtabgabe durch die Lichtquelle und insbesondere bei niedrigen Drehzahlen zu einer äußerst schwachen Ausleuchtung der Präparationsstelle.

Die Patentanmeldung WO 01/12095 A1 offenbart ein Handstück mit einem ersten Laufrad zum Antrieb eines Werkzeugs und mit einem zweiten Laufrad zum Antrieb eines Generators, wobei die beiden Laufräder über vollständig getrennte Fluidleitungen mit Antriebsfluid versorgt werden.

Der vorliegenden Erfindung liegt daher die Aufgabe zugrunde ein fluidbetriebenes medizinisches, insbesondere dentales, Handgriffelement zu schaffen, das die oben angeführten Nachteile nicht aufweist und das insbesondere eine gleich bleibende Lichtabgabe aufweist.

Diese Aufgabe wird gemäß der vorliegenden Erfindung durch ein fluidbetriebenes medizinisches, insbesondere dentales Handgriffelement mit den Merkmalen des Anspruchs 1 gelöst. Besonders vorteilhafte Ausführungsformen sind in den Unteransprüchen angeführt.

Erfindungsgemäß sind das Generatorlaufrad und das erste Laufrad seriell angeordnet. Das Fluid durchströmt dabei insbesondere zuerst den Generator und wird anschließend zum stromabwärts gelegenen ersten Laufrad weitergeleitet. Der Aufbau ist bei diesem Ausführungsbeispiel besonders einfach, da zur Leitung des Fluids und zur Versorgung der beiden Laufräder mit dem Fluid nur eine einzige Fluidleitvorrichtung benötigt wird.

Durch diesen Aufbau wird eine konstante Leistungserzeugung und -abgabe des Generators erzielt, so dass eine konstante Leistungsversorgung eines mit dem Generator elektrisch verbundenen Verbrauchers gewährleistet ist. Als Verbraucher ist bevorzugt eine Strahlungsquelle, insbesondere eine zumindest eine Leuchtdiode umfassende Lichtquelle, vorgesehen. Sobald das Handgriffelement mit einer Fluidquelle verbunden ist, werden beide Laufräder durch das Fluid angetrieben, wobei die Verringerung der Drehzahl des ersten, das Werkzeug antreibenden Laufrads ohne Auswirkung auf die Drehzahl des Generatorlaufrads bleibt. Selbst wenn das erste Laufrad und das damit verbundene Werkzeug durch die Einwirkung externer Kräfte zum Stillstand gebracht werden, ist somit die Leistungserzeugung des Generators und insbesondere die Strahlungsabgabe der Strahlungsquelle weiterhin gewährleistet.

Die serielle Anordnung der beiden Laufräder bewirkt des Weiteren einen erheblichen Vorteil bei der Ausgestaltung des Handgriffelements, insbesondere eine Vereinfachung des Aufbaus der Anschlussvorrichtung und des mit der Anschlussvorrichtung verbundenen Versorgungssystems, zum Beispiel eines Versorgungsschlauchs, der das Handgriffelement mit der Fluidquelle verbindet. Die Anschlussvorrichtung kann in bekannter Weise zum Beispiel als Steck-, Schraub-, Klemm- oder Drehkupplung ausgebildet sein, wobei unabhängig von der Kupplungsart der Aufbau und die Herstellung der Anschlussvorrichtung möglichst einfach sein soll. Dies wird durch die serielle Anordnung der beiden Laufräder erreicht, da dadurch für den Antrieb beider Laufräder in der Anschlussvorrichtung nur eine Fluidleitvorrichtung oder eine Fluidleitung vorzusehen ist.

Als Generatoren werden im Folgenden insbesondere elektrodynamische oder elektromechanische Wandler zur Erzeugung elektrischer Energie verstanden. Zum Antrieb dieser Generatoren wird ein Fluid oder Fluidgemisch verwendet, zum Beispiel eine Flüssigkeit oder ein Gas, insbesondere Wasser oder Druckluft. Das zweite Laufrad kann unterschiedliche Gestalten oder Ausformungen aufweisen, so kann es zum Beispiel als Turbinenlaufrad, ähnlich den Laufrädern in druckluftbetriebenen Turbinenhandstücken, oder als Lamellenmotor oder Flügelzellenmotor, wie sie zum Beispiel in medizinischen Luftmotoren eingesetzt werden, ausgebildet sein.

Erfindungsgemäß umfasst der Begriff Handgriffelement gerade Handgriffe oder Handstücke, gebogene Handgriffe oder Handstücke, die im Dentalbereich oftmals als Winkelstücke bezeichnet werden, als auch Teile von Handgriffen. Derartige Teile werden zum Beispiel durch einen Griffabschnitt eines Handgriffs gebildet, der zum Beispiel mit verschiedenen Kopfabschnitten für unterschiedliche Werkzeuge verbindbar ist. Die Teile von Handgriffen können jedoch auch als Zwischenstücke, Kupplungen, Adapter oder eigenständige Hülsenabschnitte ausgebildet sein.

In einem Ausführungsbeispiel ist der Generator zumindest teilweise in einer der beiden Fluidleitvorrichtung aufgenommen, bevorzugt ist der gesamte Generator in der Fluidleitvorrichtung aufgenommen. Damit wird in vorteilhafter Weise erreicht, dass der Generator zumindest teilweise oder in seiner Gesamtheit vom Fluid umströmt und / oder durchströmt und damit intensiv gekühlt wird. Um den Generator aufnehmen zu können, weist die Fluidleitvorrichtung in diesem Bereich einen vergrößerten Durchmesser auf, so dass eine Aufnahme, eine Weitung, ein Hohlraum oder eine Kammer entsteht, in die der Generator einsetzbar ist.

Die Fluidleitvorrichtung kann neben einem oder mehreren rohrförmigen, geraden oder gebogenen Leitungsabschnitten auch weitere Bauteile umfassen, zum Beispiel Bohrungen, Kanäle oder Hülsen. Insbesondere in dem Bereich mit dem vergrößerten Durchmesser ist die Fluidleitvorrichtung aus mehreren Bauteilen zusammengesetzt, die hülsen- oder trichterförmig ausgebildet sind. Unter dem Begriff Fluidleitvorrichtung ist damit auch die fluiddichte Verbindung mehrerer der oben genannten Bauteile zu verstehen. Um Druckschwankungen des Antriebfluids zu eliminieren, ist bevorzugt ein Regelventil in der Fluidleitvorrichtung vorgesehen.

In einem Ausführungsbeispiel ist der Generator zumindest teilweise von einer Außenhülle umgeben, die eine Patrone bildet und die lösbar in die Fluidleitvorrichtung einsetzbar ist. Das durch die Patrone gebildete Generatormodul umfasst dabei bevorzugt den Rotor mit der Rotorwelle, auf der das zweite Laufrad und der Rotormagnet befestigt sind, den Stator, die Lager zur drehbaren Lagerung der Rotorwelle, elektrische Kontakte zur Ableitung des vom Generator erzeugten elektrischen Stroms sowie die durch eine oder mehrere Hülsen gebildete Außenhülle. Besonders bevorzugt sind in der Patrone auch ein oder mehrere Leitelemente zur Lenkung des Fluidstroms und zur gerichteten Abgabe des Fluidstroms auf das zweite Laufrad und ein oder mehrere elektrische oder elektronische Bauteile, zum Beispiel ein Transformator oder Gleichrichter, die bevorzugt auf einer Platine befestigt sind, enthalten. Der Vorteil dieses Ausführungsbeispiels liegt in der einfachen Austauschbarkeit eines derartigen Generatormoduls, zum Beispiel bei Vorliegen eines Defekts.

Ist der Generator mit einer derartigen Außenhülle umgeben, so müssen eine oder mehrere Durchlässe wie zum Beispiel Aussparungen, Öffnungen oder Bohrungen vorgesehen sein, so dass das Antriebsfluid zum Generatorlaufrad geführt werden kann, insbesondere durch die Außenhülle zum im Inneren des Generators angeordneten Generatorlaufrads, und / oder dass das Antriebsfluid vom Generatorlaufrad abgeführt werden kann, insbesondere durch die Generatoraußenhülle nach außen. Bevorzugt ist die Generatoraußenhülle von der Fluidleitvorrichtung zumindest in einem Teilabschnitt beabstandet, so dass sich zwischen der Innenwand der Fluidleitvorrichtung und der Generatoraußenhülle ein Spalt befindet, der als Fluidkanal zur Leitung des Fluidstroms dient. Dieser Fluidkanal ist mit dem zumindest einen Durchlass in der Generatoraußenhülle verbunden oder grenzt an diesen, so dass der Fluidstrom zum Generatorlaufrad fließt und / oder vom Generatorlaufrad abfließt.

Der zumindest eine Durchlass ist besonders bevorzugt in der Nähe des Generatorlaufrads vorgesehen, so dass der Fluidstrom im Wesentlichen nur im Bereich des Generatorlaufrads im Inneren der Generatorpatrone fließt, wohingegen jener Abschnitt der Generatorpatrone, in dem der Stator, der Rotormagnet und die elektrischen und / oder elektronischen Bauteil angeordnet sind, vom Fluid nicht durchströmt wird, sondern nur äußerlich umströmt wird. Der Durchlass ist insbesondere in der Generatoraußenhülle angeordnet, so dass der Fluidstrom durch die Generatoraußenhülle leitbar ist. Der Vorteil dieser Fluidführung liegt sowohl in einer effektiven Kühlung und Wärmeabfuhr, da der gesamte Generator vom Fluid um- bzw. durchströmt wird, als auch in einer Verringerung der Verschmutzungsgefahr des Stators, des Rotormagnets und der elektrischen und / oder elektronischen Bauteile durch im Fluid enthaltene Staubpartikel, Niederschläge, Ausfällungen und insbesondere durch Schmiermittel zur Schmierung bewegter Teil im Handgriffelement.

In einem Ausführungsbeispiel weist das Handgriffelement eine längliche Form mit einem ersten Ende und einem zweiten Ende auf, wobei die erste Fluidleitung und / oder die zweite Fluidleitung sich zumindest in einem Abschnitt im Wesentlichen in axialer Richtung zwischen den beiden Ende des Handgriffelements erstrecken, so dass der Fluidstrom zumindest in diesem Abschnitt in axialer Richtung förderbar ist, und wobei zumindest ein Leitelement zur tangentialen und / oder radialen Umlenkung des Fluidstroms auf das zweite Laufrad vorgesehen ist. In einem weiteren Ausführungsbeispiel weist das Handgriffelement eine längliche Form mit einem ersten Ende und einem zweiten Ende auf, wobei die Rotationsachse des Generatorlaufrads sich im Wesentlichen in axialer Richtung zwischen diesen beiden Enden erstreckt und wobei das Generatorlaufrad derart im Handgriffelement angeordnet ist, dass es vom Fluidstrom tangential und / oder radial anströmbar ist. In beiden Ausführungsbeispielen ist der Generator bzw. die Generatorpatrone somit als lang gestreckte, bevorzugt zylindrische Einheit aufgebaut, die eine große äußere Oberfläche aufweist, an der ein Kühlfluid vorbeigeführt werden kann, so dass eine effektive Wärmeabfuhr erzielt wird.

Aufgrund der axialen Fluidumströmung des länglich ausgebildeten Generators ist es insbesondere notwendig ein oder mehrere Leitelemente vorzusehen, die das Fluid fassen und derart auf das Generatorlaufrad lenken, dass dieses optimiert anströmbar und mit hohem Wirkungsgrad betreibbar ist. Das Leitelement weist dazu unterschiedliche geometrische Elemente auf, zum Beispiel Rillen, Kanäle, Flügel oder Schaufeln.

Bevorzugt ist der Generator mit einer einteiligen rotierbare Generatorwelle versehen, auf der das zweite Laufrad und der Rotor angeordnet sind, wobei zumindest ein Lager, das in verbautem Zustand keine externe, d.h. von außerhalb des Handgriffelements einzubringende, Schmiermittelzufuhr benötigt, insbesondere ein Gleitlager, ein Hydrolager, ein Luftlager oder zumindest ein keramisches Material aufweisendes Wälzlager zur Lagerung der Generatorwelle vorgesehen ist. Der Vorteil der Verwendung dieser Lager besteht darin, dass die Gefahr des Ausfalls des Generators durch Steckenbleiben des Rotors und der Generatorwelle deutlich reduziert bzw. eliminiert wird.

In vielen Handgriffelementen sind bewegte Bauteile enthalten, die für einen dauerhaften Betrieb wiederholt mit einem Schmiermittel geschmiert werden müssen. Dies erfolgt üblicherweise durch ein ungezieltes Einbringen des Schmiermittels in das Handgriffelement, zum Beispiel in die Fluidleitvorrichtung, und durch Förderung des Schmiermittels durch das Handgriffelement und an den im Handgriffelement angeordneten Bauteilen vorbei oder durch diese hindurch bis zu dem eigentlich zu schmierenden Bauteil. Diese Vorgehensweise bringt es mit sich, dass das Schmiermittel nicht nur an dem zu schmierenden Bauteil haftet, sondern auch an vielen anderen Bauteilen, zum Beispiel am und im Generator.

Bei der Verwendung von nicht geeigneten Schmiermitteln oder nach mehrmaliger Sterilisation kann es zu Veränderungen des Schmiermittels kommen, insbesondere zu Viskositätsänderungen und Verfestigungen des Schmiermittels. In Versuchen stellte die Anmelderin fest, dass es durch diese Veränderungen des Schmiermittels oftmals zu einer vollständigen Blockade des Generators, insbesondere der Generatorwelle, durch Verkleben der Lager, die die Generatorwelle lagern, kam. Die Blockade der Generatorwelle war derart fest, dass auch die Förderung von Fluid durch den Generator die blockierte Welle nicht mehr lösen konnte, so dass der gesamte Generator und in Folge auch das Handgriffelement nicht mehr zu verwenden waren. Überraschender Weise erwiesen sich insbesondere Gleitlager, die selbst keine externe Schmiermittelzufuhr benötigen und die aufgrund ihrer kompakten Bauweise den für andere Bauteile im Handgriffelement zugeführten Schmiermittel nur wenige Haftflächen bietet, an denen sich die Schmiermittel anlagern und verfestigen können, als gegenüber diesen Verstopfungen und Blockaden erheblich weniger anfällig als andere getestete Lagertypen. Die Verwendung von Wälzlagern mit keramischen Bauteilen, zum Beispiel keramischen Laufbahnen und / oder keramischen Wälzkörpern, oder von anderen Wälzlagern, die ohne Schmiermittel betreibbar sind, verringert ebenfalls die Gefahr der Blockade der Generatorwelle durch Veränderungen des Schmiermittels.

Zur axialen Lagerung der Generatorwelle wird in einem Ausführungsbeispiel ein Punktlager verwendet, das stromabwärts des zweiten Laufrads angeordnet ist. Die Generatorwelle weist dabei ein abgerundetes oder spitzes Ende auf, das einen Lagerkörper mit einer abgerundeten oder spitzen Oberfläche aufweist, zum Beispiel eine Kugel, eine Halbkugel, einen Kegel oder einen Kegelstumpf. Durch die Anordnung des Punktlagers stromabwärts des zweiten Laufrads wird in vorteilhafter Weise eine äußerst effektive Lagerung der Generatorwelle erreicht, ohne dafür eine weitere Fixierung oder Vorspannung der Generatorwelle zu benötigen, da der Fluidstrom das Laufrad und die damit verbundene Generatorwelle selbsttätig in Richtung des Punktlagers drückt. Die Punktlagerung ermöglicht somit insbesondere in Kombination mit den Gleitlagern eine einfache, zuverlässige und kostengünstige Lagerung der Generatorwelle. Die Punktlagerung bewirkt auch eine minimierte Reibung zwischen der Generatorwelle und dem Lagerkörper, so dass der Leistungsverlust des Generators gering gehalten wird.

In einem Ausführungsbeispiel umfasst das Handgriffelement eine elektrische Leitung zur Verbindung des Generators mit einem Verbraucher, wobei die elektrische Leitung die Wand der ersten und / oder zweiten Fluidleitvorrichtung durchsetzt, und wobei eine Dichtvorrichtung zur Abdichtung des Durchtritts der elektrischen Leitung durch die erste und / oder zweite Fluidleitvorrichtung vorgesehen ist. Insbesondere wenn der Generator in der Fluidleitvorrichtung aufgenommen ist, ist es von konstruktivem Vorteil die elektrische Leitung zumindest teilweise in der Fluidleitvorrichtung zu führen. Ist der Verbraucher außerhalb der Fluidleitvorrichtung angeordnet, so durchtritt der elektrische Leiter die Seitenwand der Fluidleitung, wobei zur Abdichtung und zur Vermeidung des Verlustes und des Austritts von Fluid eine Dichtvorrichtung zur Abdichtung des Durchtritts des elektrischen Leiters durch die Fluidleitvorrichtung vorgesehen ist. Bevorzugt ist die Dichtvorrichtung an einem Trägerelement angeordnet, an dem elektrische Kontaktelemente zur Verbindung der elektrischen Leitung mit dem Generator vorgesehen sind, besonders bevorzugt ist das Trägerelement als Teil der Fluidleitvorrichtung zur Leitung des Fluidstroms zum Generator ausgebildet.

In einem besonders bevorzugten Ausführungsbeispiel versorgt der Generator des Handgriffelements eine Beleuchtungsvorrichtung mit elektrischer Energie, wobei die Beleuchtungsvorrichtung einen hermetisch gekapselten Innenraum aufweist, in dem zumindest ein optisches Halbleiterelement angeordnet ist. Durch diesen Aufbau kann das gesamte Handgriffelement mit dem Generator und der Beleuchtungsvorrichtung sterilisiert oder aggressiven Reinigungs- oder Desinfektionsmitteln ausgesetzt werden. Kommt es dennoch zu einem Ausfall der Beleuchtungsvorrichtung durch Stöße oder insbesondere zu mechanischen Zerstörungen der Oberfläche durch Zerkratzen, so ist des Weiteren vorgesehen, die Beleuchtungsvorrichtung lösbar im Handgriffelement anzuordnen, so dass sie gegen eine neue, intakte Beleuchtungsvorrichtung austauschbar ist.

Bevorzugt ist der Generator exzentrisch in dem Handgriffelement verbaut, so dass ausreichend Platz vorhanden ist, um weitere im Handgriffelement aufgenommene Bauteile, insbesondere Medienleitungen am Generator vorbei führen zu können.

Die Erfindung wird nachfolgend anhand eines bevorzugten Ausführungsbeispiels und Bezug nehmend auf die beigefügten Zeichnungen erläutert:
Figur 1 zeigt ein erstes Ausführungsbeispiel eines fluidbetriebenen, dentalmedizinischen Handgriffelements mit einem Generator, wobei das Generatorlaufrad und das Laufrad zum Antrieb des Werkzeugs durch eine gemeinsame Fluidleitungvorrichtung mit einem Antriebsfluid versorgt werden.
Figur 2 zeigt eine vergrößerte Darstellung des Generators aus Figur 1 in einer ersten Schnittebene, insbesondere zur Erläutung der Fluidleitvorrichtung.
Figur 3 zeigt eine vergrößerte Darstellung des Generators aus Figur 1 in einer zweiten Schnittebene, insbesondere zur Veranschaulichung der elektrischen Bauteile des Generators.
Figur 4 zeigt ein zweites Ausführungsbeispiel eines fluidbetriebenen dentalmedizinischen Handgriffelements mit einem Generator, das als Kupplung oder Adapter zum Anschluss an ein Hand- oder Winkelstück ausgebildet ist.
Figur 5 zeigt ein drittes Ausführungsbeispiel eines fluidbetriebenen dentalmedizinischen Handgriffelements mit einem Generator und einer Beleuchtungsvorrichtung, das als Kupplung oder Adapter zum Anschluss an ein Hand- oder Winkelstück ausgebildet ist.
Figur 6 zeigt eine alternative Ausführungsform eines Generators für ein fluidbetriebenes, dentalmedizinisches Handgriffelement.

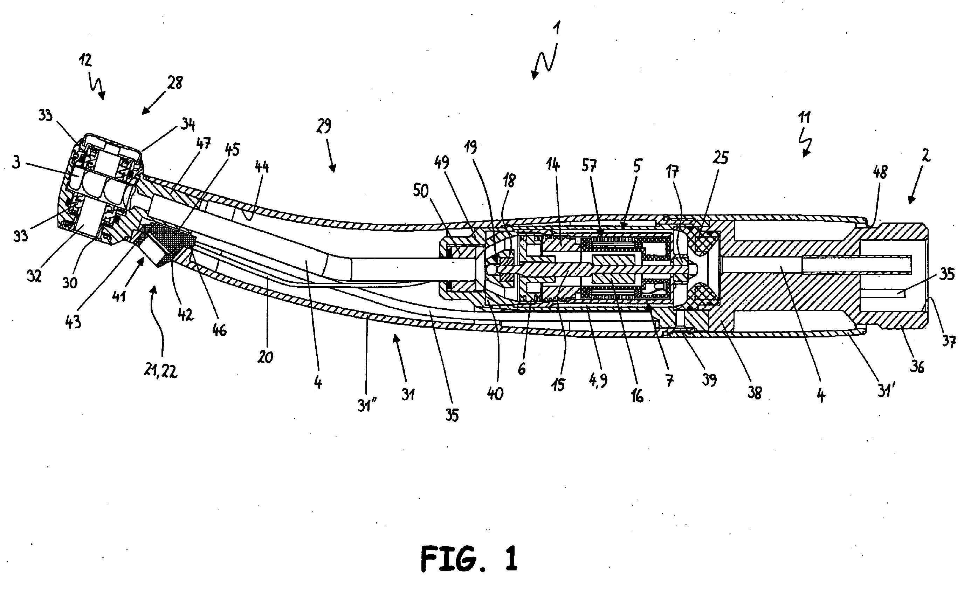

Das in Figur 1 dargestellte medizinische, insbesondere dentalmedizinische Handgriffelement 1 weist ein erstes Ende 11 und ein zweites Ende 12 auf. Das zweite Ende 12 ist als Kopfabschnitt 28 ausgebildet, an den lösbar ein länglicher Griffabschnitt 29 anschließt. Das Handgriffelement 1 ist als so genanntes Winkelstück ausgebildet, bei dem der Griffabschnitt 29 aus zwei zueinander gewinkelt angeordnete Abschnitten besteht und bei dem die Werkzeugöffnung 30 seitlich am Kopfabschnitt 28 angeordnet ist, so dass ein Behandlungswerkzeug quer zum Griffabschnitt 29 in den Kopfabschnitt 28 einsetzbar ist. Eine ein- oder mehrteilige Außenhülse 31 umgibt den Griffabschnitt 29 und den Kopfabschnitt 28. Selbstverständlich kann das Handgriffelement auch andere Außenformen, insbesondere eine gerade oder eine pistolenförmige Gestalt aufweisen.

Im Vorderbereich oder Kopfabschnitt 28 des Handgriffelements 1 befindet sich in bekannter Weise eine über die Werkzeugöffnung 30 zugängliche Werkzeugaufnahme 32. Die Werkzeugaufnahme 32 ist zumindest teilweise in einer Hohlwelle aufgenommen, die beweglich gelagert ist, insbesondere durch zwei Kugellager 33. Auf der Hohlwelle ist ein erstes Laufrad 3 befestigt, das durch ein Antriebsfluid, zum Beispiel Druckluft, gemeinsam mit der Hohlwelle und der Werkzeugaufnahme 32. in eine Drehbewegung versetzbar ist. Eine Werkzeuglösevorrichtung 34 mit einem Druckknopf erleichtert die Entnahme eines in die Werkzeugaufnahme 32 einsetzbaren Werkzeugs, zum Beispiel eines rotierenden Bohrers.

Das erste Laufrad 3 ist als Freistrahl- oder Gleichdruckturbine ausgebildet, d.h. der im Fluid anliegende dynamische Druck wird zum Antrieb des Laufrads 3 verwendet und über das Laufrad 3 abgebaut, so dass der dynamische Druck (Fließdruck) des Antriebsfluids vor dem Laufrad 3 bzw. vor dem Auftreffen auf das Laufrad 3 höher ist als nach dem Laufrad 3. Der Antrieb des Laufrads 3 erfolgt somit durch die im Antriebsfluid enthaltene kinetische Energie. Als Laufrad 3 wird zum Beispiel ein Pelton-Laufrad oder ein einem Pelton-Laufrad ähnliches Laufrad verwendet. Die Versorgung des ersten Laufrads 3 mit Fluid erfolgt über eine Fluidleitvorrichtung 4, die sich von der Anschlussvorrichtung 2 durch das gesamte Handgriffelement 1 bis zum Kopfabschnitt 28 erstreckt. Am kopfnahen Ende der Fluidleitvorrichtung 4 tritt das Fluid als Freistrahl aus der Leitvorrichtung 4 aus und trifft auf das erste Laufrad 3. Das erste Laufrad 3 ist in einer Kammer aufgenommen, aus der zumindest ein Großteil des Fluids in eine Rückluftleitung eintritt. Die Rückluftleitung umfasst entweder eine eigene Leitung, die wiederum das Handgriffelement 1 durchsetzt, oder sie ist durch die Außenhülse 31 des Handgriffelements 1 gebildet.

Am ersten Ende 11 des Handgriffelements 1 ist eine Anschlussvorrichtung 2 zum direkten oder indirekten Anschluss des Handgriffelements 1 an ein Steuer- und / oder Versorgungseinrichtung vorgesehen. Die Anschlussvorrichtung 2 kann insbesondere als Steck-, Schraub-, Klemm- oder Drehkupplung ausgebildet sein, die mit einem Versorgungsschlauch verbindbar ist, in dem eine oder mehrere Medienleitungen angeordnet sind. In der Anschlussvorrichtung 2 sind mehrere Bohrungen, Kanäle oder Leitungen zur Übernahme von Medien vorgesehen, zum Beispiel eine Wasserleitung 35 und eine Fluid- oder Druckluftleitung 4. Die Wasserleitung 35 verläuft durch das Handgriffetement 1 bis zum Kopfabschnitt 28, wo das Wasser mit Druckluft vermischt und über Öffnungen am Kopfabschnitt 28 abgegeben wird.

Die Anschlussvorrichtung 2 ist in einem eigenen Teil 31' der Außenhülse 31 aufgenommen. Der Außenhülsenteil 31' ist über ein Gewinde 39 mit dem Außenhülsenteil 31 " verbunden. Die Anschlussvorrichtung 2 hat eine lang gestreckte Form und ist an ihrem dem Kopfabschnitt 28 abgewandten Ende mit einem Gewinde 36 zur Verbindung mit dem Versorgungsschlauch und mit einer Aufnahme 37 für ein Kupplungsgegenstück des Versorgungsschlauchs versehen. An ihrem dem Kopfabschnitt 28 zugewandten Ende weist die Anschlussvorrichtung 2 eine flanschartige Verbreiterung 38 auf, die von Bohrungen für Schrauben durchsetzt ist, über die die Anschlussvorrichtung 2 mit Bauteilen im Außenhülsenteil 31" verbunden und befestigt ist. Alternativ ist die Anschlussvorrichtung 2 in dem Außenhülsenteil 31' aufgenommen und durch die Verschraubung der beiden Außenhülsenteile 31', 31" im Handgriffelement 1 verspannt.

An die Anschlussvorrichtung 2 bzw. an den durch die Anschlussvorrichtung 2 verlaufenden Teil der Fluidleitung 4 schließt der Generator 5 zur Erzeugung elektrischer Energie an. Das Fluid durchströmt zuerst den Generator 5 und wird anschließend zum stromabwärts gelegenen ersten Laufrad 3 weitergeleitet, das Generatorlaufrad 6 und das erste Laufrad 3 sind somit seriell oder hintereinander angeordnet. Die Fluidleitung 4 ist mit einem Abschnitt mit verbreitertem Durchmesser versehen, der eine Aufnahme 40 bildet, in die der Generator 5 vollständig einsetzbar ist.

Eine elektrische Leitung 20 verbindet den Generator 5 mit einem Verbraucher 21, zum Beispiel in Form einer Beleuchtungsvorrichtung 22. Die Beleuchtungsvorrichtung 22 ist in einer Öffnung 42 der Außenhülse 31 angeordnet und umfasst zumindest ein optisches Halbleiterelement, insbesondere eine Leuchtdiode (LED), besonders bevorzugt eine weiße LED. Die Leuchtdiode emittiert bevorzugt Strahlung mit einer Wellenlänge im Bereich von etwa 380 - 700 nm zur Beleuchtung der Präparationsstelle.

Die Beleuchtungsvorrichtung 22 umfasst ein Beleuchtungsmodul 41 mit dem zumindest einen optischen Halbleiterelement. Das Beleuchtungsmodul 41 befindet sich in der Lichtabgabeöffnung 42 der Außenhülse 31 des Handgriffelements 1, wobei zumindest der Großteil des Beleuchtungsmoduls 41 bzw. des optischen Halbleiterelements im Inneren des Handgriffelements 1 aufgenommen ist. Dadurch stört das Beleuchtungsmodul 41 die Handhabung des Handgriffelements 1 nicht. Durch die Anordnung des Beleuchtungsmoduls 41 in unmittelbarer Nähe des Kopfteils 28 ist für die Abgabe der Strahlung auf die Präparationsstelle kein Lichtleiter notwendig.

Das zumindest eine optische Halbleiterelement ist in einem Innenraum des Beleuchtungsmoduls 41 aufgenommen, wobei gemäß einem bevorzugten Ausführungsbeispiel der Innenraum gegenüber der Umgebung hermetisch abgeschlossen ist, so dass das optische Halbleiterelement gemeinsam mit dem Handgriffelement 1 unterschiedlichen Reinigungs- und Pflegemaßnahmen, insbesondere Sterilisationen unterzogen werden kann und vor externen Einflüssen, zum Beispiel Dampf, Verschmutzungen, Partikeln oder Reinigungs-, Desinfektions- oder Sterilisationsmitteln, geschützt ist. Der hermetisch abgeschlossene Innenraum wird von einem Sockel und von einer damit dicht verbundenen, zum Beispiel verschweißten, Kappe gebildet. An der Kappe ist des Weiteren ein transparentes Lichtabgabefenster vorgesehen, durch das die von dem optischen Halbleiterelement erzeugte Strahlung durchtreten kann. Anstelle des Lichtabgabefensters oder daran anschließend können weitere optische Elemente wie Lichtleiter oder Linsen vorgesehen sein. Diese optischen Elemente können als Teil des Beleuchtungsmoduls 41 oder als separate Bauteile ausgebildet sein.

Das Beleuchtungsmodul 41 besteht des Weiteren aus einer Fassung 43, die eine im Wesentlichen hülsenförmige, zylindrische Form hat und die von einer Bohrung durchsetzt ist. Die Fassung 43 ist bevorzugt aus elektrisch nicht leitendem Material hergestellt. In der Bohrung sind der Sockel und die Kappe aufgenommen. In dem dem Innenraum 44 des Handgriffelements 1 zugewandten Ende der Fassung 43 befindet sich des Weiteren ein Vergussmassekörper 45, der insbesondere durch ein Kunstharz, zum Beispiel Epoxidharz oder Silikonharz gebildet ist. Der Vergussmassekörper 45 umhüllt das Vorderende der elektrischen Leitung 20, die mit dem Generator 5 verbunden ist, insbesondere jenen Abschnitt der Leitung 20, der frei von einem isolierenden Schutzmantel ist. Der Vergussmassekörper 45 umgibt auch die elektrischen Kontakte der Leuchtdiode. Die Leitung 20 und die Kontakte sind durch den Vergussmassekörper 45 unlösbar miteinander verbunden. Bevorzugt sind die Leitung 20 und die Kontakte zusätzlich noch miteinander verlötet, verschweißt oder gekrimpt (verquetscht). Der Vergussmassekörper 45 dichtet das Beleuchtungsmodul 41 und die Kontakte auch ab.

Am Außenmantel der Fassung 43 ist in einer Nut ein Dichtelement, zum Beispiel ein Dichtring aufgenommen, der zwischen der Außenhülse 31 des Handgriffelements 1 und dem Außenmantel der Fassung 43 geklemmt ist. Das Dichtelement dichtet den Innenraum 44 des Handgriffelements 1 und die darin enthaltenen Bauteile von der Umgebung ab und verhindert das Eindringen von Partikeln, Verschmutzungen, Behandlungsmedien, Reinigungsmitteln etc. in das Handgriffelement 1 sowie den Austritt von Schmiermittel aus dem Inneren des Handgriffelements 1. Eine derartige Dichtung kann alternativ oder zusätzlich auch am Handgriffelement 1 selbst angebracht sein.

An der Fassung 43 sind des Weiteren Befestigungsmittel vorgesehen, die der Befestigung der Beleuchtungsvorrichtung 22 am Handgriffelement 1 dienen. Die Befestigungsmittel umfassen zum Beispiel einen Flansch 46, der an einem Ende der Fassung 43 angeordnet ist, und den Außenmantel der Fassung 43. Das Beleuchtungsmodul 41 ist in die Lichtabgabeöffnung 42 eingesteckt, wobei der Außenmantel der Fassung 43 so bemessen ist, dass er eine klemmende Verbindung mit der Außenhülse 31 des Handgriffelements 1 eingeht. Die Außenhülse 31 weist zur Vergrößerung der reibenden oder klemmenden Kontaktfläche mit dem Außenmantel der Fassung 43 ein Befestigungselement auf, zum Beispiel in Form von in den Innenraum 44 ragenden Vorsprüngen, Ringschultern etc. Ist die Fassung 43 vollständig in die Lichtabgabeöffnung 42 eingesteckt, so kontaktiert der Flansch 46 das freie Ende des Befestigungselements, wodurch einerseits eine zusätzliche Fixierung als auch eine genaue Positionierung des Beleuchtungsmoduls 41 in der Lichtabgabeöffnung 42 erreicht wird.

Die Befestigung des Beleuchtungsmoduls 41 in der Lichtabgabeöffnung 42 wird zusätzlich auch noch durch den Kopfabschnitt 28 bewirkt. Der Kopfabschnitt 28 weist an seiner dem Griffabschnitt 29 zugewandten Seite einen Fortsatz 47 auf, der zur Verbindung des Kopfabschnitts 28 mit dem Griffabschnitt 29 in den Innenraum 44 einsteckbar ist. Der Fortsatz 47 ist derart bemessen, dass er, wenn er in den Innenraum 44 eingesetzt ist, das Beleuchtungsmodul 41 kontaktiert und in Richtung der Lichtabgabeöffnung 42 drückt, so dass das Beleuchtungsmodul 41 fest in der Lichtabgabeöffnung 42 fixiert ist.

Die Energieversorgung des zumindest einen optischen Halbleiterelements erfolgt über die elektrischen Pins oder Kontakte des Halbleiterelements, die elektrische Leitung 20 und das Trägerelement 25, das, wie weiter unten noch beschrieben, weitere elektrische Kontakte zum Anschluss an den Generator 5 umfasst.

Bevorzugt ist das Beleuchtungsmodul 41 als lösbares oder austauschbares Modul ausgebildet, wobei der Austausch insbesondere über den Innenraum 44 des Handgriffelements 1 und die Kupplungsöffnung 48 erfolgt. Alternativ ist das Beleuchtungsmodul 41 durch die Lichtabgabeöffnung 42 aus dem Handgriffelement 1 entfernbar. Bevorzugt ist auch der Generator 5 als austauschbarer Generator oder als Generatorpatrone ausgebildet, die ebenfalls über die Kupplungsöffnung 48 aus dem Handgriffelement 1 entfernbar sind.

In beiden Fällen muss der Anwender zuerst die Anschlussvorrichtung 2 und das Außenhülsenteil 31' vom Handgriffelement 1 trennen. Die Anschlussvorrichtung 2 ist bevorzugt durch mehrere Schrauben mit im Inneren des Handgriffelements 1 angeordneten Bauteilen verbunden und durch Lösen dieser Schrauben aus dem Handgriffelement 1 entnehmbar. Nach Lösen des Außenhülsenteil 31' ist der verbreitete Abschnitt der Fluidleitung 4 freigelegt, in den der Generator 5 bzw. die Generatorpatrone ohne weitere Befestigung eingeschoben sind, so dass der Generator in einfacher Weise aus der Fluidleitung entnommen werden kann.

Zur Entnahme des Beleuchtungsmoduls 41 löst der Anwender in einem nächsten Schritt die Trägerhülse 49, die Teil des verbreiterten Abschnitts der Fluidleitung 4 ist, vom Handgriffelement 1. Dazu sind eine in einer Querbohrung der Außenhülse 31 aufgenommene Schraube zur axialen Fixierung der Trägerhülse 49 und die Hohlschraube 50 zu lösen. Anschließend ist der Kopfabschnitt 28 des Handgriffelements 1 vom Griffabschnitt 29 zu trennen, wodurch das durch den Kopfabschnitt 28 in die Lichtabgabeöffnung 42 gedrückte Beleuchtungsmodul 41 aus der Lichtabgabeöffnung 42 lösbar ist. Der Anwender übt nun von außen mit einem Finger oder einem Hilfswerkzeug Druck auf das Beleuchtungsmodul 41 aus, so dass dieses in den Innenraum 44 des Handgriffelements 1 verschoben wird. Über die Kupplungsöffnung 48 zieht der Anwender schließlich das Beleuchtungsmodul 41 und bevorzugt auch die Leitung 20 aus dem Handgriffelement 1 heraus.

Das Einfügen des Generators 5 und des Beleuchtungsmoduls 41 in das Handgriffelement 1 erfolgt ebenfalls über den Innenraum 44 und die Kupplungsöffnung 48, in umgekehrter Reihenfolge wie es für das Entfernen beschrieben wurde.

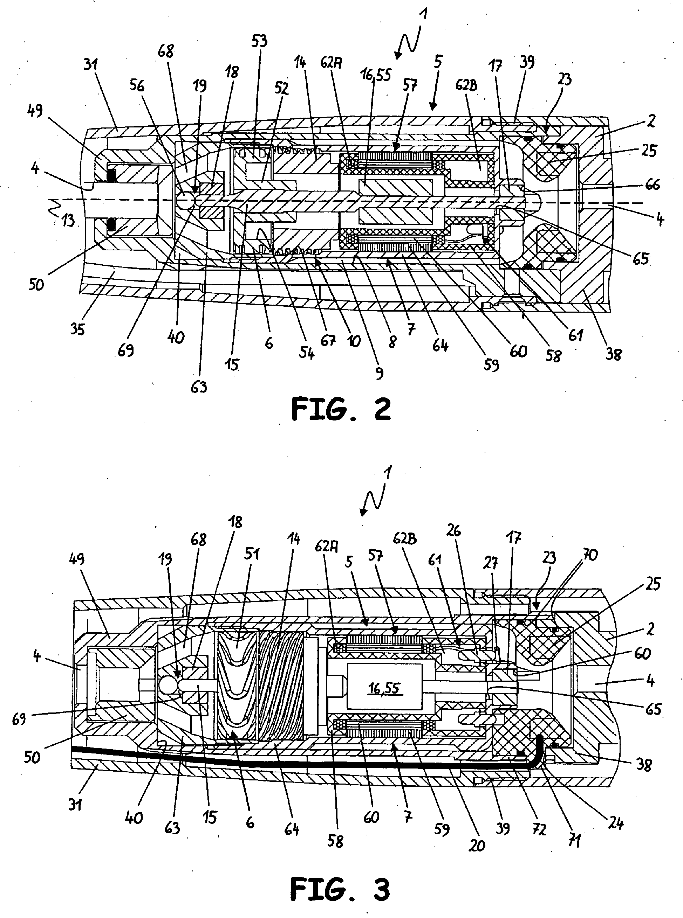

Der detaillierte Aufbau des Generators 5 wird im Folgenden unter Bezugnahme auf die beiden Figuren 2 und 3 erläutert.

Der Generator 5 umfasst eine Generatorwelle 15, auf der das zweite Laufrad oder Generatorlaufrad 6 und der Rotor 16 befestigt sind. Das Generatorlaufrad 6 ist als Überdruckturbine ausgebildet, bei der der dynamische Druck (Fließdruck) des Antriebsfluids vor und nach dem Laufrad 6 in etwa gleich ist und der statische Druck bzw. die Enthalpie abnehmen. Das Laufrad 6 ist zum Beispiel als Francis- oder Kaplanlaufrad oder als Laufrad, das einem dieser beiden Laufradtypen ähnelt, ausgebildet. Bei Betrieb ist das Generatorlaufrad 6 vollständig in das Antriebsfluid eingetaucht. Wie insbesondere aus Figur 3 zu erkennen ist, weist das zweite Laufrad 6 mehrere Schaufeln 51 auf, die durch in die Oberfläche des Laufrads 6 eingearbeitete, insbesondere gefräste, im Wesentlichen U- oder V-förmige Nuten voneinander getrennt sind. Die Nuten weisen über ihre gesamte Länge in etwa eine gleich bleibende Tiefe und Breite auf. Das Antriebsfluid durchfließt diese Nuten, wodurch das Laufrad 6 und damit die Generatorwelle 15 mit dem Rotor 16 in Rotation versetzt wird.

Die durch die Generatorwelle 15 verlaufende Rotationsachse 13 des Generatorlaufrads 6 erstreckt sich im Wesentlichen in axialer Richtung zwischen den beiden Enden 11, 12 des Handgriffelements 1. Das zweite Laufrad 6 ist derart im Handgriffelement 1 angeordnet, dass es vom Fluidstrom tangential und / oder radial anströmbar ist. Zur Verringerung des Gewichts ist das Generatorlaufrad 6 T-förmig ausgebildet, umfassend ein hülsenförmig, zylindrisch ausgebildetes und von einer Bohrung durchsetztes Zentralelement 52 zum Befestigen des Laufrads 6 an der Generatorwelle 15 und ein vom Zentralelement 52 gewinkelt abstehendes, ringförmiges Schaufelelement 53 mit den Schaufeln 51 und Nuten. Das Schaufelelement 53 ist vom Zentralelement 52 durch eine Ringnut 54 beabstandet.

Der Rotor 16 ist als Magnetelement 55 ausgebildet, wobei das Magnetelement 55 ein Einfachmagnet oder ein Segmentmagnet mit mehreren Polpaaren sein kann. Das Magnetelement 55 ist bevorzugt zylindrisch geformt und ist mit einer zentralen Bohrung versehen, durch die die Generatorwelle 15 verläuft. Die Generatorwelle 15 weist zwei Teilbereiche mit unterschiedlichen Durchmessern auf, wobei am Teilbereich mit dem größeren Durchmesser das Laufrad 6 und am Teilbereich mit dem geringeren Durchmesser das Magnetelement 55 angeordnet ist. Die Verringerung des Durchmessers der Generatorwelle 15 im Bereich des Magnetelements 55 bezweckt eine Erhöhung der Leistungserzeugung des Generators 5 durch zur Verfügung stellen von möglichst viel magnetischem Material bei gleichzeitig möglichst geringem Durchmesser des Rotors 16 und damit des gesamten Generators 5. Der Außendurchmesser des Magnetelements 55 beträgt bevorzugt etwa 3,4 - 4,2 mm, besonders bevorzugt etwa 3,7 - 3,9 mm. Der Innendurchmesser der Bohrung des Magnetelements 55 und entsprechend der geringere Durchmesser der Generatorwelle 15 betragen bevorzugt etwa 0,7 - 1,2 mm, besonders bevorzugt 0,9 - 1,1 mm.

Die im Wesentlichen axial verlaufende Anordnung der Generatorwelle 15 und der Rotationsachse 13 des zweiten Laufrads 6 und die Befestigung des zweiten Laufrads 6 und des Rotors 16 auf einer gemeinsamen Welle in Form der Generatorwelle 15 ermöglicht die Lagerung dieser Bauteile durch nur zwei Lager bzw. an nur zwei Lagerstellen. Gemäß der in den Figuren 2 und 3 dargestellten bevorzugten Ausführungsform sind die beiden Lagerstellen an den jeweiligen Enden der Generatorwelle 15 vorgesehen. Beide Lagerstellen umfassen je ein Gleitlager 17, 18. An der dem Kopfabschnitt 28 zugewandten Lagerstelle ist des Weiteren ein Punktlager 19 zur axialen Lagerung der Generatorwelle 15 vorgesehen, das eine Kugel 56 sowie das abgerundete Vorderende der Generatorwelle 15 umfasst. Das Punktlager 19 ist stromabwärts des zweiten Laufrads 6 angeordnet, so dass bei Betrieb des Generators 5 der Fluidstrom das zweite Laufrad 6 und die damit verbundene Generatorwelle 15 selbsttätig in Richtung des Punktlagers 19 drückt.

Radial um den Rotor 16 ist der Stator 57 angeordnet. Der Stator 57 umfasst eine aus Kunststoff bestehende, bevorzugt durch Druck- oder Spritzguss hergestellte, Statorhülse 58, zumindest ein Magnetflusselement 59, zumindest eine Spule 60 und mit der zumindest einen Spule 60 verbundene elektrische Kontaktelemente 61 zur Abgabe des vom Generator 5 erzeugten elektrischen Stroms an den Verbraucher 21. Die Statorhülse 58 weist eine zentrale Bohrung auf, in der der Rotor 16 aufgenommen ist und durch die die Generatorwelle 15 verläuft. Die beiden Enden der Statorhülse 58 sind doppelwandig ausgebildet, wobei in den ringförmigen, um den zylindrischen Zentralteil der Statorhülse 58 verlaufenden Zwischenräumen 62A, 62 B zwischen den beiden Wänden zumindest teilweise die Spule 60, die elektrischen Kontaktelemente 61 und gegebenenfalls weitere elektrische oder elektronische Bauteile, wie zum Beispiel ein Transformator oder ein Gleichrichter angeordnet sind. Das zumindest eine Magnetflusselement 59 ist zwischen den beiden freien Enden der außen liegenden Wandabschnitte der Statorhülse 58 angeordnet. Zur Fixierung und zum Schutz sind die Statorhülse 58, das zumindest eine Magnetflusselement 59, die zumindest eine Spule 60, die elektrischen Kontaktelemente 61 und die elektrischen oder elektronischen Bauteile mit einer Vergussmasse, zum Beispiel einem Kunstharz, insbesondere Epoxydharz oder Silikonharz, vergossen.

Werden das zweite Laufrad 6 und der Rotor 16 durch das Antriebsfluid in Rotation versetzt, so wird in bekannter Weise durch das wechselnde Magnetfeld des Magnetelements 55 in der zumindest einen Spule 60 elektrischer Wechselstrom induziert.

Zwischen dem Generatorlaufrad 6 und dem Stator 57 bzw. dem Rotor 16 ist zumindest ein Leitelement 14 zur tangentialen und / oder radialen Umlenkung des Fluidstroms auf das zweite Laufrad 6 vorgesehen. Wie insbesondere aus Figur 3 zu erkennen ist, weist das Leitelement 14 mehrere spiralförmige Nuten oder Rillen auf, die zum zweiten Laufrad 6 orientiert sind und die das Fluid auf das Laufrad 6 und insbesondere in dessen Schaufelnuten lenken. Das Leitelement 14 ist ebenfalls mit einer zentralen Bohrung versehen, so dass es von der Generatorwelle 15 durchsetzbar ist.

Der Generator 5 ist zur einfachen Austauschbarkeit als Generatorpatrone ausgebildet. Dazu ist eine Außenhülle 7 vorgesehen, die aus einem Lagerschild 63 und einer zylindrischen Generatorhülse 64 besteht, die über ein Gewinde miteinander verbunden sind. An dem dem Gewinde gegenüber liegenden Ende ist die Generatorhülse 64 durch eine Seitenwand verschlossen, wobei in der Seitenwand eine Öffnung 65 vorgesehen ist, die von einer ringförmigen Wand umgeben ist. Die Seitenwand und die ringförmige Wand bilden gemeinsam eine Aufnahme 66, die als erste Lagerstelle dient und in die das Gleitlager 17 eingesetzt ist. Die Generatorwelle 15 durchsetzt die Öffnung 65 und ragt mit ihrem ersten Ende bis in die Aufnahme 66. In der Generatorhülse 64 sind des Weiteren mehrere Bohrungen 67 vorgesehen, die einen Durchlass 10 bilden und die den Generator 5 und das Innere der Außenhülle 7 mit der Fluidleitvorrichtung 4 verbindet, so dass das Antriebsfluid zum zweiten Laufrad 6 fließen kann.

Das Lagerschild 63 besteht aus einem hülsenförmigen Abschnitt, der, wenn das Lagerschild 63 mit der Generatorhülse 64 verbunden ist, das Generatorlaufrad 6 umgibt, und aus einem daran anschließenden, sich verjüngendem Abschnitt mit mehreren Bohrungen 68, die das Antriebsfluid nach dem Durchtritt durch das Generatorlaufrad 6 sammeln und an einen Abschnitt der Fluidleitung 4 mit einem geringeren Durchmesser abgeben. Im Zentrum des Lagerschilds 63 ist die zweite Lagerstelle für die Generatorwelle 15 vorgesehen. Diese Lagerstelle umfasst eine Aufnahme 69 mit einer Bohrung mit unterschiedlichen Durchmessern, wobei in dem ersten, dem Kopfabschnitt 28 zugewandten Bohrungsabschnitt mit dem geringeren Durchmesser die Kugel 56 des Punktlagers 19 und im zweiten, dem Kopfabschnitt 28 abgewandten Bohrungsabschnitt mit dem größeren Durchmesser das zweite Gleitlager 18 sitzt. Die Generatorwelle 15 ragt in die Aufnahme 69, insbesondere durch den Bohrungsabschnitt mit dem größeren Durchmesser bis in den Bohrungsabschnitt mit dem geringeren Durchmesser.

Der Generator 5 bzw. die Generatorpatrone ist in einem Abschnitt der Fluidleitvorrichtung 4 mit einem vergrößerten Durchmesser, der eine Aufnahme 40 bildet, aufgenommen. Der Abschnitt der Fluidleitvorrichtung 4 mit dem vergrößerten Durchmesser umfasst das Trägerelement 25 und die daran anschließende Trägerhülse 49. Der Generator 5 ist in den die Aufnahme 40 bildenden Innenraum der Trägerhülse 49 eingeschoben und wird durch das auf den Generator 5 und die Trägerhülse 49 aufsteckbare Trägerelement 25 fixiert.

Die Trägerhülse 49 weist an ihrem dem Kopfabschnitt 28 zugewandten Ende einen Abschnitt mit einem verringerten Durchmesser auf, in dem eine Hohlschraube 50 angeordnet ist. Die Hohlschraube 50 ist über ein Gewinde mit einem als Rohrleitung mit geringerem Durchmesser ausgebildeten Abschnitt der Fluidleitung 4, der durch eine Öffnung der Trägerhülse 49 tritt, verbunden. Ein an der Hohlschraube 50 angebrachtes Dichtelement verhindert den Austritt des Antriebfluids aus der Fluidleitung 4. Nach dem Passieren des Generatorlaufrads 6 durchströmt das Antriebsfluid somit das Lagerschild 63 und die Innenbohrung der Hohlschraube 50 und gelangt über den mit geringerem Durchmesser ausgebildeten Abschnitt der Fluidleitvorrichtung 4 zum ersten Laufrad 3.

Die Generatoraußenhülle 7, insbesondere Generatorhülse 64, ist von der die Generatoraußenhülle 7 umgebenden Innenwand 8 der Fluidleitung 4 zumindest in einem Abschnitt beabstandet, so dass dazwischen ein Fluidkanal 9 zur Leitung des Fluidstroms gebildet ist. Der Fluidkanal 9 mündet in einen Durchlass 10 in Form mehrerer Bohrung 67 zur Leitung des Fluidstroms zum zweiten Laufrad 6. Der Durchlass 10 ist bevorzugt rund um das Leitelement 14 angeordnet, so dass das im Fluidkanal 9 in axialer Richtung fließende Antriebsfluid direkt in das Leitelement 14 eintritt und durch dieses in eine für die Anströmung des Generatorlaufrads 6 optimale tangentiale und / oder radiale Fließrichtung umgelenkt wird.

Das Trägerelement 25 ist eine, bevorzugt durch Spritzguss, hergestellte Kunststoffhülse mit einer Innenbohrung. Das Trägerelement 25 schließt an seinem ersten Ende an den Generator 5 und die Trägerhülse 49 und an seinem zweiten Ende an die Anschlussvorrichtung 2 an. Durch die Innenbohrung des Trägerelements 25 fließt das Antriebsfluid von der Anschlussvorrichtung 2 in den Fluidkanal 9, so dass das Trägerelement 25 als Teil der Fluidleitvorrichtung 4 ausgebildet ist.

Zusätzlich sind am Trägerelement 25 Teile der elektrischen Verbindung zwischen dem Generator 5 und dem Verbraucher 21 vorgesehen, so dass das Trägerelement auch als Steckplatine dient. Von der zumindest einen Spule 60 des Stators 57 erstrecken sich elektrische Kontaktelemente 61, zum Beispiel Drähte, elektrische Leitungen und Kontaktstifte 26, durch die Statorhülse 58. Die Kontaktstifte 26 ragen des Weiteren durch Öffnungen in der Statorhülse 58 und in der Generatorhülse 64 bis in das Trägerelement 25, an dem ein elektrisch leitender Federkontakt 27 vorgesehen ist. Der Federkontakt 27 ist mit der elektrischen Leitung 20, an die der Verbraucher 21 angeschlossen ist, verbunden. Das der Anschlussvorrichtung 2 zugewandte Ende der Leitung 20 ist zwecks einer sicheren Verbindung und beständigen Abdichtung mit einem Vergussmaterial, zum Beispiel Kunstharzen, insbesondere Epoxydharz oder Silikonharzen, das bevorzugt unter Vakuum aufgebracht wird, mit dem Trägerelement 25 verbunden.

Wie insbesondere aus der Figur 3 zu erkennen ist, tritt die elektrische Leitung 20 aus dem Trägerelement 25 und damit aus der Fluidleitvorrichtung 4 aus. Die elektrische Leitung 20 ist in einem Vorsprung 71 des Trägerelements 25 aufgenommen, der durch die Trägerhülse 49 ragt. Um an der Durchtrittsstelle 24 der elektrischen Leitung 20 in der Wand 72 der Fluidleitung 4 ein Ausfließen des Antriebsfluids zu verhindern, ist eine Dichtvorrichtung 23 vorgesehen, die bevorzugt am Trägerelement 25 angeordnet ist. Die Dichtvorrichtung 23 umfasst ein oder mehrere Dichtelement, zum Beispiel O-Ringe, die in Nuten 70 des Trägerelements 25, neben dem Vorsprung 71 aufgenommen sind und im verbauten Zustand die Anschlussvorrichtung 2 und die Trägerhülse 49 kontaktieren.

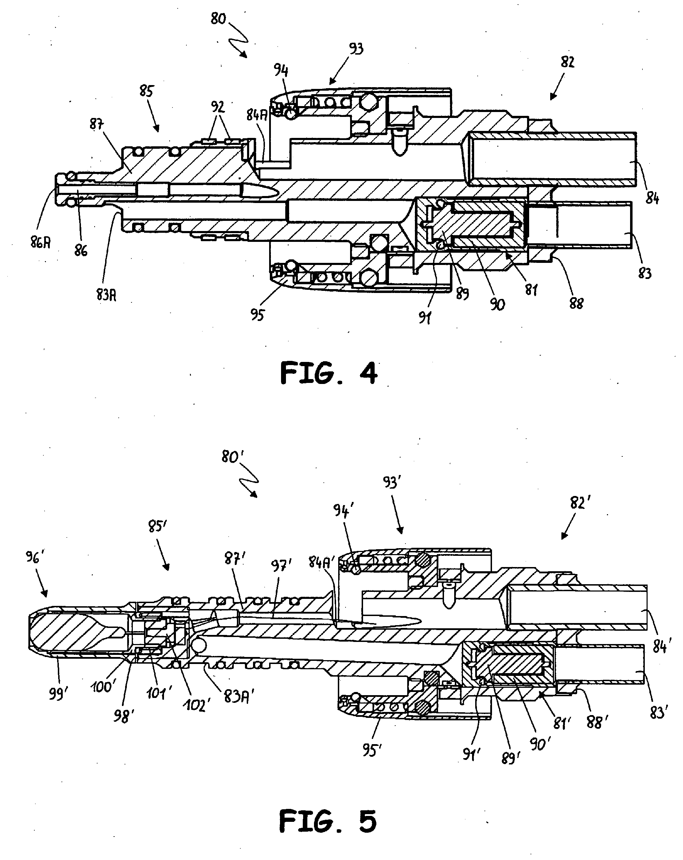

In den Figuren 4 und 5 sind zwei alternative Ausführungsbeispiele fluidbetriebener medizinischer, insbesondere dentaler, Handgriffelemente mit einem Generator 81, 81' dargestellt, wobei das Handgriffelement als Adapter oder Kupplungsvorrichtung 80, 80' ausgebildet ist. Der Adapter oder die Kupplungsvorrichtung 80, 80' verbinden ein medizinisches, insbesondere dentales, Handstück oder Winkelstück mit einem Versorgungsschlauch und / oder mit einer Steuer- und / oder Versorgungseinrichtung und / oder mit einer oder mehreren Medienquellen, so dass ein Medium oder mehrere Medien, zum Beispiel Wasser, Druckluft oder Druckgas, Licht etc., oder Steuersignale zwischen dem Hand- oder Winkelstück und dem Versorgungsschlauch und / oder der Steuer- und / oder Versorgungseinrichtung und / oder den Medienquellen leitbar sind. Der Adapter oder die Kupplungsvorrichtung 80, 80' weisen dafür eine oder mehrere Medienleitungen auf, zum Beispiel Bohrungen, Kanäle, Leitungen oder Nuten, die jeweils Leitungen im Hand- oder Winkelstück mit Leitungen des Versorgungsschlauchs, der Steuer- und / oder Versorgungseinrichtung und / oder der Medienquellen verbinden.

Zur Verbindung der Kupplungsvorrichtung 80, 80' mit dem Hand- oder Winkelstück ist eine lösbare Verriegelungsvorrichtung 93, 93' vorgesehen, die eines oder mehrere Verriegelungselemente 94, 94', die mit entsprechenden Gegenelementen des Hand- oder Winkelstücks zusammenwirken, sowie ein Betätigungselement 95, 95', zum Beispiel eine Schiebehülse, zum Betätigen des zumindest einen Verriegelungselements 94, 94' umfasst. Die Schiebehülse dient auch als Außen- oder Griffhülse der Kupplungsvorrichtung 80, 80'.

Die Kupplungsvorrichtung 80, 80' weist eine längliche Gestalt mit einem ersten Ende und einem zweiten Ende auf, wobei an einem der beiden Enden eine Anschlussvorrichtung 82, 82' zur lösbaren Verbindung mit dem Versorgungsschlauch und / oder der Steuer- und / oder Versorgungseinrichtung und / oder den Medienquellen und an dem anderen Ende eine Anschlussvorrichtung 85, 85' zur lösbaren Verbindung mit dem Hand- oder Winkelstück vorgesehen ist. Die Anschlussvorrichtungen 82, 82', 85, 85' können grundsätzlich als Steck-, Schraub-, Klemm- oder Drehkupplung ausgebildet sein, wobei gemäß den Ausführungsformen nach Figur 4 und 5 die Anschlussvorrichtungen 82, 82' als Steckkupplungen und die Anschlussvorrichtung 85, 85' als Steck-Drehkupplung ausgebildet sind.

An der Anschlussvorrichtung 82, 82' sind zwei Fluidleitvorrichtungen oder Fluidleitungen 83, 84 und 83', 84' zu erkennen, die sich bis zur Anschlussvorrichtung 85, 85' erstrecken. Die Leitung 83, 83' fördert ein Fluid, insbesondere Druckluft, zum Hand- oder Winkelstück und die Leitung 84, 84' fördert das Fluid vom Hand- oder Winkelstück weg. Alternativ kann die Anschlussvorrichtung 82, 82' auch nur die Leitung 83, 83' zur Förderung des Fluids zum Hand- oder Winkelstück aufweisen. An der Anschlussvorrichtung 82, 82' ist eine weitere, aufgrund der in den Figuren 4 und 5 gewählten Schnittebenen nicht zu erkennende Fluidleitung, insbesondere zur Leitung von Wasser in das Hand- oder Winkelstück, vorgesehen. Alle Fluidleitungen weisen jeweils kurze Rohrabschnitte auf, die über die Stirnfläche 88, 88' der Anschlussvorrichtung 82, 82' ragen und in Bohrungen oder Kanälen der Kupplungsvorrichtung 80, 80' aufgenommen sind.

Die Anschlussvorrichtung 85, 85' umfasst einen stab- oder zapfenförmigen, zylindrischen Körper 87, 87' zum Anschluss an das Hand- oder Winkelstück, insbesondere zur Aufnahme in einer Kupplungsaufnahme, zum Beispiel einem Kupplungsrohr des Hand- oder Winkelstücks. An der Anschlussvorrichtung 85, 85' sind die beiden Fluidleitungen 83, 84 und 83', 84' sowie bei der Anschlussvorrichtung 85 die zentrisch im Kupplungszapfen 87 angeordnete Fluidleitung 86 für das Wasser mit der zugehörigen Öffnung 86A zu erkennen. Die Leitung 83 endet in einer Öffnung 83A im Bereich einer ringförmigen Stufe oder Schulter des Kupplungszapfens 87, die Leitung 83' mündet in einen Ringkanal 83A' auf der Mantelfläche des Kupplungszapfens 87'. Die Leitung 84, 84' endet in einer Öffnung 84A, 84A' an der Basis des Kupplungszapfens 87, 87'. An der Mantelfläche des Kupplungszapfens 87, 87' sind des Weiteren mehrere Ringnuten mit Dichtelementen, zum Beispiel O-Ringen, zum Abdichten der einzelnen Medienübergänge vorgesehen.

Der Generator 81, 81' ist derart ausgebildet oder in der Kupplungsvorrichtung 80, 80' angeordnet, dass zumindest ein Teil seines Laufrads 89, 89' in der Treibluftleitung 83, 83' aufgenommen ist. Besonders bevorzugt ist das gesamte Laufrad 89, 89' in der Treibluftleitung 83, 83' aufgenommen, so dass das Laufrad 89, 89' vollständig von dem Antriebsfluid umströmbar ist oder in diesem getaucht ist. Bevorzugt sind auch weitere Bauteile des Generators 81, 81', zum Beispiel zumindest Teile des Rotors oder des Stators oder der den Generator 81, 81' oder Teil davon umgebenden Hülse 90, 90', zur Kühlung des Generators 81, 81' in der Treibluftleitung 83, 83' angeordnet. Die Hülse 90, 90' schützt den Generator 81, 81' vor Verschmutzungen und kann Teil einer den gesamten Generator 81, 81' umgebenden Patrone sein.

Am Generator 81, 81' oder als Teil des Generators 81, 81' ist zumindest ein Leitelement 91, 91' vorgesehen, das die Richtung des Antriebsfluids derart umlenkt oder verändert, dass das Laufrad 89, 89' des Generators 81, 81' radial und / oder tangential anströmbar ist. Das Leitelement 91, 91' umfasst zum Beispiel Rillen oder Nuten, die bevorzugt in oder an der Hülse 90, 90' vorgesehen sind. Das Antriebsfluid strömt vor der Umlenkung durch das Leitelment 91, 91' im Wesentlichen axial, bezogen auf die Längsachse der Kupplungsvorrichtung 80, 80', durch die Fluidleitung 83, 83'.

Die Flügel des Laufrads 89, 89' sind derart ausgebildet oder geformt, insbesondere weisen sie eine geschwungene oder gebogene Form auf, dass sie die Strömungsrichtung des Antriebsfluids verändern. Bevorzugt bewirken sie ein im Wesentlichen axiales, bezogen auf die Längsachse der Kupplungsvorrichtung 80, 80', Aus- oder Weiterströmen des Fluids in der Fluidleitung 83, 83'. Anstelle des Laufrads 89, 89' oder zusätzlich zum Laufrad 89, 89' können weitere Bauteile am Generator 81, 81' oder anschließend an den Generator 81, 81' vorgesehen sein, die, insbesondere beim Durchströmen des Generators 81, 81' und / oder nach dem Durchströmen des Generators 81, 81' ein im Wesentlichen axiales Weiterströmen des Antriebsfluid bewirken.

Durch den Einbau des gesamten Laufrads 89, 89' in die Fluidleitung 83, 83', dessen vollständige Umströmung durch das Antriebsfluid und die radiale und / oder tangentiale Anströmung des Laufrads 89, 89' wird eine besonders hohe Leistungserzeugung des Generators 81, 81' erreicht.

Wie bereits weiter oben erwähnt, ist die Kupplungsvorrichtung 80, 80' mit einem medizinischen, insbesondere dentalen, Hand- oder Winkelstück lösbar verbindbar, wobei das Hand- oder Winkelstück bevorzugt eine fluidbetriebene Antriebseinheit umfasst, insbesondere ein mittels Druckluft antreibbares Laufrad, so dass das Hand- oder Winkelstück als druckluftbetriebenes Turbinenhandstück ausgebildet ist. Durch die Verbindung des Adapters oder der Kupplungsvorrichtung 80, 80' mit einem Hand- oder Winkelstück entsteht somit ein Handgriffelement, das zwei Laufräder umfasst. Ein derartiges Turbinenhandstück weist einen Vorderbereich oder Kopfabschnitt auf, der dem Kopfabschnitt 28 des Handgriffelements 1 der Figur 1 gleicht, in dem also insbesondere eine über eine Werkzeugöffnung zugängliche Werkzeugaufnahme angeordnet ist, die zumindest teilweise in einer Hohlwelle aufgenommen und die beweglich gelagert ist, insbesondere durch zwei Kugellager. Auf der Hohlwelle ist das Laufrad befestigt, das durch Druckluft gemeinsam mit der Hohlwelle und der Werkzeugaufnahme in eine Drehbewegung versetzbar ist. Die Druckluft wird dem Laufrad über eine erste Fluidleitvorrichtung oder Treibluftleitung zugeführt und nach der Passage des Laufrads über eine zweite Fluidleitvorrichtung oder Rückluftleitung wieder abgeführt.

Durch die Verbindung des Turbinenhandstücks mit der Kupplungsvorrichtung 80, 80' wird die Fluidleitung 83, 83' der Kupplungsvorrichtung 80, 80' mit der Treibluftleitung des Turbinenhandstücks sowie die Fluidleitung 84, 84' der Kupplungsvorrichtung 80, 80' mit der Rückluftleitung des Turbinenhandstücks verbunden. Das Laufrad 89, 89' des Generators 81, 81' sowie das Laufrad des Turbinenhandstücks sind somit seriell oder, in Bezug auf die Fluidströmung, hintereinander angeordnet. In anderen Worten sind die beiden Laufräder an oder entlang einer einzigen Fluidleitung angeordnet, die in zwei voneinander trennbare bzw. miteinander verbindbare Abschnitte unterteilt ist. Diese einzige, gemeinsame Fluidleitung leitet das Antriebsfluid zuerst einem Laufrad, bevorzugt dem Laufrad 89, 89' des Generators 81, 81', und anschließend dem anderen Laufrad, bevorzugt dem Laufrad des Turbinenhandstücks, zu.

Um einen derartigen seriellen Betrieb der beiden Laufräder zu ermöglichen und insbesondere eine ausreichende Leistungserzeugung oder ein ausreichendes Drehmoment beider Laufräder zu erhalten, ist in einem bevorzugten Ausführungsbeispiel das Laufrad 89, 89' des Generators 81, 81' als Überdruckturbine oder Reaktionsturbine ausgebildet, zum Beispiel als Francis- oder Kaplanturbine oder als Turbine, die diesen beiden Turbinentypen ähnelt. Als Überdruckturbine oder Reaktionsturbine werden Turbinen oder Laufräder bezeichnet, bei denen der statische Druck am Eintritt in das Laufrad größer ist als am Austritt. Besonders bevorzugt ist zusätzlich das Laufrad des Turbinenhandstücks als Gleichdruck-, Freistrahl- oder Aktionsturbine ausgebildet, zum Beispiel als Pelton-Laufrad oder als ein einem Pelton-Laufrad ähnliches Laufrad, bei denen der statische Druck am Laufradeintritt und am Laufradaustritt gleich groß, so dass primär der dynamische Druck bzw. die kinetische Energie des Antriebsfluids das Laufrad antreibt.

Gemäß der Ausführungsform nach Figur 4 ist der Generator 81 über zwei elektrische Leitungen oder Kabel mit zwei elektrischen Kontakten 92 verbunden, die an der dem Hand- oder Winkelstück zugewandten Anschlussvorrichtung 85 angeordnet sind. Zwecks einfacher Herstellung verlaufen die elektrischen Leitungen oder Kabel zumindest teilweise in Fluidleitungen, zum Beispiel den Leitungen 83, 84. Bevorzugt sind die beiden Kontakte 92 als Kontaktringe ausgebildet, die den Kupplungszapfen 87 an seiner Mantelfläche umgeben und Teil von Schleifkontakten sind. Dem entsprechend sind am Hand- oder Winkelstück elektrische Gegenkontakte vorgesehen, die die elektrischen Kontakte 92 kontaktieren, so dass der vom Generator 81 erzeugte Strom einem oder mehreren elektrischen Verbrauchern im oder am Hand- oder Winkelstück zugeführt werden kann, zum Beispiel einer Beleuchtungsvorrichtung, die bevorzugt zumindest eine Leuchtdiode umfasst, einem Laserlichtgenerator oder einer Steuer- oder Regelvorrichtung.

Im Gegensatz dazu ist bei der Kupplungsvorrichtung 80' nach Figur 5 zumindest ein elektrischer Verbraucher, insbesondere eine Beleuchtungsvorrichtung 96' mit zumindest einer Leuchtdiode oder einer Glühbirne, in oder an der Kupplungsvorrichtung 80' vorgesehen. Bevorzugt ist die Beleuchtungsvorrichtung 96' am Kupplungszapfen 87', insbesondere an dessen freien, dem Hand- oder Winkelstück zugewandten Ende in einer Aufnahme 98' angeordnet, so dass das von der Beleuchtungsvorrichtung 96' erzeugte Licht direkt an das Hand- oder Winkelstück übertragbar, zum Beispiel in einen Lichtleiter einkoppelbar, ist. Die Verbindung zwischen dem Generator 81' und dem elektrischen Verbraucher erfolgt über zwei elektrische Leitungen oder Kabel 97', die wiederum zumindest teilweise in Fluidleitungen, zum Beispiel den Leitungen 83', 84' verlaufen. Um ein ungewolltes Ausströmen des Fluids aus der die elektrischen Leitungen 97' aufnehmenden Leitung 83', 84' zu verhindern, sind im Bereich der Eintrittsstelle der elektrischen Leitungen 97' in die Leitung 83', 84' und im Bereich der Austrittsstelle der elektrischen Leitungen 97' aus der Leitung 83', 84' jeweils ein oder mehrere Dichtelemente vorgesehen.

Die Lampe oder Leuchtdiode der Beleuchtungsvorrichtung 96' ist zum mechanischen Schutz und zum Schutz vor Verschmutzungen bevorzugt von einer Hülse 99', insbesondere einer Kunststoffhülse, umgeben. Die Beleuchtungsvorrichtung 96' umfasst des Weiteren eine Fassung 100', die über eine Befestigungsvorrichtung 101', zum Beispiel einem Gewinde oder einer Steckverbindung, direkt oder indirekt über eine Buchse mit der Aufnahme 98' des Kupplungszapfens 87' verbunden ist. Zur Verbindung mit den elektrischen Leitungen 97' umfasst die Beleuchtungsvorrichtung 96' zwei elektrische Kontakte, die zum Beispiel durch die Fassung 100', durch einen oder zwei Metallstifte 102', Federkontakte oder Buchsen gebildet sind. Die elektrischen Leitungen 97' sind mit den elektrischen Kontakten der Beleuchtungsvorrichtung 96' direkt oder indirekt über Teile der Aufnahme 98' verbunden.

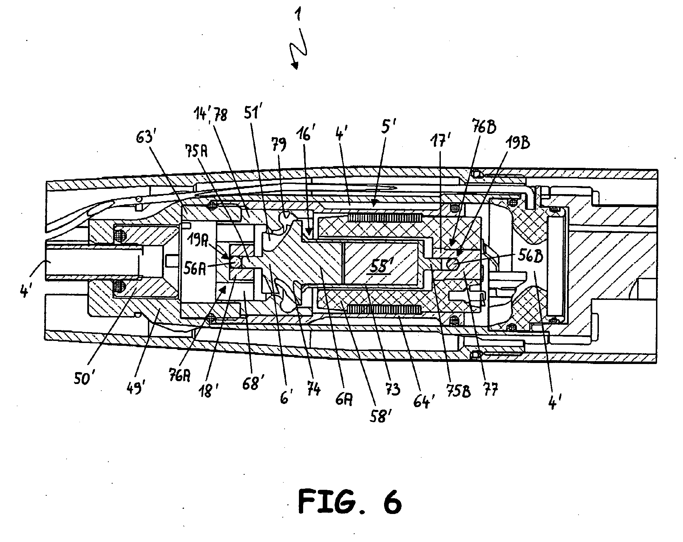

Der in Figur 6 dargestellte Generator 5' ähnelt in seinem Aufbau dem in den Figuren 2 und 3 dargestellten und weiter oben detailliert beschriebenen Generator 5 und kann anstelle dieses Generators 5 zum Beispiel in ein Handgriffelement 1 gemäß Figur 1 oder in einen Adapter oder eine Kupplungsvorrichtung 80, 80' gemäß den Figuren 4, 5 eingebaut werden. Im Folgenden wird daher primär auf jene Merkmale eingegangen, die den Generator 5' vom Generator 5 unterscheiden.

Um den Rotor 16' des Generators 5' mit dem Rotormagneten 55', der bevorzugt als Neodym-Eisen-Bor-Magnet ausgebildet ist, vor äußeren Einflüssen wie Reinigungsmittel, Wasserdampf oder Verschmutzungen besser schützen zu können, ist der Rotormagneten 55 mit einer Schutzhülse 73 umgeben, die aus einem nicht magnetischen Material besteht, zum Beispiel aus Stahl oder Kunststoff.

Der zylindrische Rotormagnet 55' ist vollständig in der topfförmigen Schutzhülse 73 aufgenommen. An den Rotormagnet 55' anschließend und ebenfalls zumindest teilweise in der Schutzhülse 73 angeordnet ist ein schaftförmiger Fortsatz 6A des zweiten Laufrads 6', wobei der Fortsatz 6A einen geringeren Durchmesser als das zweite Laufrad 6' hat. Der Fortsatz 6A ragt durch die einzige Öffnung 74 der Hülse 73 in diese hinein, wobei die Hülse 73 mit dem schaftförmigen Fortsatz 6A verschweißt oder verpresst und bevorzugt zusätzlich verklebt ist.

An dem der Öffnung 74 gegenüberliegenden Ende der Hülse 73 ist, bevorzugt als integraler Teil der Hülse 73, ein stummelförmiger Wellenteil 75B vorgesehen, der zur drehbaren Lagerung des Rotors 16' an einer Lagerstelle 76B dient. Diese Lagerstelle 76B ist zumindest teilweise durch die Statorhülse 58' des Generators 5' gebildet, insbesondere durch eine Bohrung oder Aufnahme in der Statorhülse 58', und umfasst ein Gleitlager 17' sowie ein Punktlager 19B zur axialen Lagerung des Rotors 16'. Das Gleitlager 17' umfasst eine in der Aufnahme der Statorhülse 58' befestigte Lagerbuchse 77 mit einer Sacklochbohrung, in die der Wellenteil 75B ragt und in der sich, zwischen dem Wellenteil 75B und dem Boden der Sacklochbohrung, die Kugel 56B des Punktlagers 19B befindet. Die Kugel 56B des Punktlagers 19B ist bevorzugt aus Keramik hergestellt oder weist eine keramische Beschichtung auf. Bevorzugt ist die Schutzhülse 73, insbesondere der Wellenteil 75B, beschichtet, zum Beispiel mit einer Titan-Nitrid-Schicht oder mit einer Nickel-Schicht, (chemisch Nickel), um die Oberfläche des Wellenteils 75B zu härten.

An dem gegenüber liegenden Ende des Rotors 16' ist ein zweiter kurzer, stummelförmiger und bevorzugt ebenfalls wie Wellenteil 75B beschichteter Wellenteil 75A vorgesehen, der an einer weiteren Lagerstelle 76A drehbar gelagert ist. Die Lagerstelle 76A umfasst wiederum ein Gleitlager 18' und ein Punktlager 19A mit einer keramischen oder keramisch beschichteten Kugel 56A. Die Lagerstelle 76A wird durch eine Aufnahme mit einer Sacklochbohrung des Lagerschilds 63' gebildet, in der die Kugel 56A und die Welle 75A aufgenommen sind.

Der gesamte Rotor 16' einschließlich des zweiten Laufrads 6' und des Rotormagneten 55' wird somit rotatorisch ausschließlich durch die Gleitlager 17', 18' gelagert. Die Verwendung von Gleitlagern hat den bereits weiter oben im Detail beschriebenen Vorteil, dass die Gefahr des Ausfalls des Generators 5' durch Steckenbleiben des Rotors 16' und der durch die beiden Wellen 75A, 75B gebildeten Generatorwelle durch Verschmutzungen und insbesondere durch an den Generatorlagern anhaftenden Schmiermittel zur Schmierung von Bauteilen des Handgriffelements deutlich reduziert bzw. eliminiert wird.

Der Generator 5', insbesondere das zweite Laufrad 6', sind von einer Leithülse 78 umgeben, die an den Lagerschild 63' anschließt und sich innerhalb der Trägerhülse 49' für den Generator 5' befindet. Die Leithülse 78 weist zumindest eine spiralförmige Rille oder Nut 79 auf und dient somit als Leitelement 14' zur tangentialen und / oder radialen Umlenkung des Fluidstroms auf das zweite Laufrad 6'. Die zumindest eine Rille 79 ist mit der Fluidleitvorrichtung 4', in der das Antriebsfluid für das Generatorlaufrad 6' geführt wird, über eine oder mehrere Bohrungen in der Generatorhülse 64' verbunden. Die Fluidleitvorrichtung 4' wird im Bereich des Generators 5' durch einen Spalt zwischen der Trägerhülse 49' und der Generatorhülse 64' gebildet, der vom Antriebsfluid axial, bezogen auf die Längsachse des Generators 5' oder des Handgriffelements 1, durchströmt wird.

Das zweite Laufrad 6' ist als Überdruck- oder Reaktionsturbine ausgebildet, insbesondere als Francisturbine, und ist vollständig in der Fluidleitvorrichtung 4' aufgenommen, so dass es bei Betrieb vollständig im Antriebsfluid getaucht ist. Die Schaufeln 51' des zweiten Laufrads 6' sind derart ausgebildet oder geformt, insbesondere weisen sie eine geschwungene oder gebogene Form auf, dass sie die Strömungsrichtung des Antriebsfluids verändern. Bevorzugt bewirken sie ein im Wesentlichen axiales, bezogen auf die Längsachse des Generators 5' oder des Handgriffelements 1, Aus- oder Weiterströmen des Fluids durch die Fluidleitvorrichtung 4', insbesondere durch die Bohrungen 68' des Lagerschilds 63', durch die Hohlschraube 50' und die daran anschließende Fluidleitung. Nach dem Verlassen des Generators 5' fließt das Antriebsfluid zum ersten Laufrad 3 (siehe Figur 1), das an oder entlang der Fluidleitvorrichtung 4' seriell zum zweiten Laufrad 6' angeordnet ist.

Alle beschriebenen und abgebildeten Merkmale aller Ausführungsbeispiele sind miteinander kombinierbar oder gegeneinander austauschbar.

So ist es selbstverständlich möglich, das Generatorlaufrad und das Magnetelement des Rotors ohne Abstand, einander kontaktierend auszuführen. Alternativ können das Generatorlaufrad oder Teile davon aus magnetischem Material hergestellt sein, so dass das Laufrad sowohl die Antriebsfunktion als auch die Funktion des Magnetelements des Generators übernimmt.

Anstatt das Magnetelement in Drehung zu versetzen ist es auch möglich, eine oder mehrere Spulen mit dem Laufrad zu verbinden und diese zu rotieren und das Magnetelement nicht rotierbar und als Teil des Stators auszuführen.

Alternativ zu der in Figur 1 dargestellten Ausführungsform, bei der das Antriebsfluid zuerst den Generator 5 und dann das erste Laufrad 3, das das Werkzeug antreibt, durchströmt, ist es selbstverständlich auch möglich, das Antriebsfluid zuerst dem das Werkzeug antreibenden Laufrad und anschließend über eine Fluidleitvorrichtung dem Generator zuzuführen. Die Fluidleitvorrichtung kann dabei zumindest teilweise durch die Außenhülse des Handgriffelements gebildet sein.

Der Generator kann neben der Versorgung einer Beleuchtungsvorrichtung mit Strom auch als Energiequelle für einen oder mehrerer andere Verbraucher dienen, zum Beispiel für einen Diodenlaser, einen Ultraschall- oder Mikrowellengenerator, ein Analgesiegerät, für Messsensoren, zum Beispiel zur Messung von Temperaturen, der Beschleunigung, des Drehmoments, der Drehzahl oder der Schallstärke, für Mikrofone, für Aktoren, zum Beispiel Piezoelementen zur Schwingungsdämpfung, für Schaltkreise zur Verarbeitung oder Aufbereitung von Daten oder Messwerten, für Steuer- und / oder Regelschaltungen, für Datenübertragungsvorrichtungen und Sender, für Vorrichtungen zur Erkennung von an das Handgriffelement anschließbaren Werkzeugen oder für Instrumente und für Anzeigen oder Displays.

Zusätzlich oder alternativ zur Wärmeableitung über das Antriebsfluid kann das Handgriffelement mit einer Kühlvorrichtung zur Ableitung der vom Generator erzeugten Wärme versehen. Die Kühlvorrichtung kann zum Beispiel aktive oder passive Kühlkörper, Wärmerohre (so genannte ,heat pipes') mit einem im Inneren enthaltenen, verdampfenden und kondensierenden Wärmeübertragungsmedium, Wärmeleitpasten oder -pads oder andere bekannte wärmeleitende Vorrichtungen umfassen.

## Patentansprüche

1. Fluidbetriebenes, medizinisches, insbesondere dentales, Handgriffelement (1, 80, 80') mit einer Anschlussvorrichtung (2, 82, 82') zur Verbindung des Handgriffelements (1, 80, 80') mit einer Fluidquelle, einem durch ein Fluid in Rotation versetzbaren ersten Laufrad (3), das mit einem Werkzeug verbindbar oder verbunden ist, so dass das Werkzeug durch das erste Laufrad (3) in eine Arbeitsbewegung versetzbar ist, einem Generator (5, 5', 81, 81') zur Erzeugung elektrischer Energie, wobei der Generator (5, 5', 81, 81') ein zweites, durch ein Fluid in Rotation versetzbares Laufrad (6, 6', 89, 89') umfasst, und mit einer Fluidleitvorrichtung (4, 4', 83, 83') zur Förderung eines Fluidstroms von der Anschlussvorrichtung (2, 82, 82') zu den beiden Laufrädern (3; 6, 6', 89, 89'), **gekennzeichnet durch**
eine serielle Anordnung der beiden Laufräder (3; 6, 6', 89, 89'), so dass das in der Fluidleitvorrichtung (4, 4', 83, 83') leitbare Antriebsfluid zuerst einem der beiden Laufräder (3; 6, 6', 89, 89') und anschließend dem anderen der beiden Laufräder (3; 6, 6', 89, 89') zuführbar ist, wobei das Laufrad (6, 6', 89, 89') des Generators (5, 5', 81, 81') als Überdruckturbine ausgebildet ist, zum Beispiel als Francis- oder Kaplanturbine.

2. Handgriffelement (1, 80, 80') nach Anspruch 1, **dadurch gekennzeichnet, dass** das Laufrad (6, 6', 89, 89') des Generators (5, 5', 81, 81') vollständig in der Fluidleitvorrichtung (4) aufgenommen ist, so dass es vom Antriebsfluid vollständig umströmbar ist.

3. Handgriffelement (1, 80, 80') nach Anspruch 1 oder 2, **dadurch gekennzeichnet, dass** der gesamte Generator (5, 5', 81, 81') in der Fluidleitvorrichtung (4, 4', 83, 83') aufgenommen ist.

4. Handgriffelement (1, 80, 80') nach Anspruch 3, **dadurch gekennzeichnet, dass** der Generator (5, 5', 81, 81') zumindest teilweise von einer Außenhülle (7) umgeben ist, die lösbar in die Fluidleitvorrichtung (4, 4', 83, 83') einsetzbar ist.

5. Handgriffelement (1, 80, 80') nach einem der vorhergehenden Ansprüche, **dadurch gekennzeichnet, dass**
das Handgriffelement (1, 80, 80') zweiteilig aufgebaut ist, wobei jeweils ein Laufrad (6, 6', 89, 89') in einem der beiden Teile des Handgriffelements (1, 80, 80') angeordnet ist und die beiden Teile des Handgriffelements (1, 80, 80') lösbar miteinander verbindbar sind.

6. Handgriffelement (1, 80, 80') nach Anspruch 5, **dadurch gekennzeichnet, dass** die beiden Teile des Handgriffelements (1, 80, 80') durch ein Hand- oder Winkelstück und durch eine Kupplung (80, 80') oder einen Adapter gebildet sind, wobei der Generator (5, 5', 81, 81') in der Kupplung (80, 80') oder im Adapter angeordnet ist.

7. Handgriffelement (1, 80, 80') nach Anspruch 6, **dadurch gekennzeichnet, dass** in der Kupplung (80, 80') oder im Adapter eine Beleuchtungsvorrichtung (96') vorgesehen ist, die mit dem Generator (5, 5', 81, 81') elektrisch verbunden ist, wobei die Beleuchtungsvorrichtung (96') insbesondere eine Leuchtdiode aufweist.

8. Handgriffelement (1, 80, 80') nach einem der vorhergehenden Ansprüche,
**gekennzeichnet durch**
eine, bezogen auf die Längsachse des Handgriffelements (1, 80, 80'), im Wesentlichen axiale Leitung des Antriebsfluids **durch** das Handgriffelement (1, 80, 80') und eine radiale und / oder tangentiale Anströmung des Generatorlaufrads (6, 6', 89, 89').

9. Handgriffelement (1, 80, 80') nach Anspruch 8, **gekennzeichnet durch** ein Leitelement (14, 14') zur radialen und / oder tangentialen Umlenkung des Antriebsfluidstroms auf das Generatorlaufrad (6, 6', 89, 89').

10. Handgriffelement (1, 80, 80') nach Anspruch 8 oder 9, **dadurch gekennzeichnet, dass** die Schaufeln (51') des Generatorlaufrads (6, 6', 89, 89') derart ausgebildet oder geformt sind, dass sie die Strömungsrichtung des Antriebsfluids verändern und ein im Wesentlichen axiales, bezogen auf die Längsachse des Generators (5, 5', 81, 81') oder des Handgriffelements (1, 80, 80') Aus- oder Weiterströmen des Fluids durch die Fluidleitvorrichtung (4, 4', 83, 83') bewirken.

11. Handgriffelement (1, 80, 80') nach einem der vorhergehenden Ansprüche, **dadurch gekennzeichnet, dass**
in Bezug auf die Strömungsrichtung des Antriebsfluids das Generatorlaufrad (6, 6', 89, 89') stromaufwärts des ersten Laufrads (3) angeordnet ist, so dass das Antriebsfluid zuerst dem Generatorlaufrad (6, 6', 89, 89') und anschließend dem ersten Laufrad (3) zuführbar ist.

12. Handgriffelement (1, 80, 80') nach Anspruch 11, **dadurch gekennzeichnet, dass**
das erste Laufrad (3) als Gleichdruckturbine ausgebildet ist, zum Beispiel als Pelton-Laufrad.

13. Handgriffelement (1, 80, 80') nach einem der vorhergehenden Ansprüche, **dadurch gekennzeichnet, dass**
der Generator (5, 5', 81, 81') einen Rotormagneten (55, 55') umfasst, der in einer Schutzhülse (73) aus einem nicht magnetischen Material aufgenommen ist.

14. Handgriffelement (1, 80, 80') nach einem der vorhergehenden Ansprüche, **gekennzeichnet durch**
zumindest ein Gleitlager (17, 17', 18, 18') zur Drehlagerung des Rotors (16, 16') des Generators (5, 5', 81, 81').

15. Handgriffelement (1, 80, 80') nach einem der vorhergehenden Ansprüche, **gekennzeichnet durch**
zumindest ein Punktlager (19, 19A, 19B) zur axialen Lagerung des Rotors (16, 16') des Generators (5, 5', 81, 81').

## Claims

1. A fluid-operated medical, in particular dental, handheld element (1, 80, 80') with a connecting device (2, 82, 82') for connecting the handheld element (1, 80, 80') to a fluid source, a first impeller (3) that can be induced to rotate by a fluid and is or can be connected to a tool so that the tool can be induced to execute a working motion by the first impeller (3), a generator (5, 5', 81, 81') for generating electric power, the generator (5, 5', 81, 81') comprising a second impeller (6, 6', 89, 89') that can be induced to rotate by a fluid, and with a fluid conducting device (4, 4', 83, 83') for conveying a fluid stream from the connecting device (2, 82, 82') to the two impellers (3; 6, 6', 89, 89'), **characterized by**
a serial arrangement of the two impellers (3; 6, 6', 89, 89'), so that the drive fluid which can be conducted in the fluid conducting device (4, 4', 83, 83') can be supplied first to one of the two impellers (3; 6, 6', 89, 89') and then to the other of the two impellers (3; 6, 6', 89, 89'), wherein the impeller (6, 6', 89, 89') of the generator (5, 5', 81, 81') is designed as a excess pressure turbine, for example as a Francis or Kaplan turbine.

2. The handheld element (1, 80, 80') according to Claim 1, **characterized in that** the impeller (6, 6', 89, 89') of the generator (5, 5', 81, 81') is accommodated completely in the fluid conducting device (4) so that it can be flowed around completely by the drive fluid.

3. The handheld element (1, 80, 80') according to Claim 1 or 2, **characterized in that** the entire generator (5, 5', 81, 81') is accommodated in the fluid conducting device (4, 4', 83, 83').

4. The handheld element (1, 80, 80') according to Claim 3, **characterized in that** the generator (5, 5', 81, 81') is surrounded at least partially by an outer shell (7) which is releasably insertable into the fluid conducting device (4, 4', 83, 83').

5. The handheld element (1, 80, 80') according to one of the preceding claims,
**characterized in that**
the handheld element (1, 80, 80') is constructed in two parts, wherein respectively one impeller (6, 6', 89, 89') is arranged in one of the two parts of the handheld element (1, 80, 80') and the two parts of the handheld element (1, 80, 80') can releasably be connected with each other.

6. The handheld element (1, 80, 80') according to Claim 5, **characterized in that** the two parts of the handheld element (1, 80, 80') are formed by a handpiece or contra-angle handpiece and by a coupling (80, 80') or an adapter, wherein the generator (5, 5', 81, 81') is arranged in the coupling (80, 80') or in the adapter.

7. The handheld element (1, 80, 80') according to Claim 6, **characterized in that** a lighting device (96') is provided in the coupling (80, 80') or in the adapter, which is connected electrically with the generator (5, 5', 81, 81'), wherein in particular the lighting device (96') comprises a light emitting diode.

8. The handheld element (1, 80, 80') according to one of the preceding Claims,
**characterized by**
a substantially axial conducting of the drive fluid through the handheld element (1, 80, 80'), in relation to the longitudinal axis of the handheld element (1, 80, 80'), and with a radial and/or tangential flowing against the generator impeller (6, 6', 89, 89').

9. The handheld element (1, 80, 80') according to Claim 8, **characterized by** a conducting element (14, 14') for the radial and/or tangential deflection of the drive fluid stream onto the generator impeller (6, 6', 89, 89').

10. The handheld element (1, 80, 80') according to Claim 8 or 9, **characterized in that** the vanes (51') of the generator impeller (6, 6', 89, 89') are designed or shaped such that they alter the direction of flow of the drive fluid and cause a substantially axial flow out or on of the fluid, in relation to the longitudinal axis of the generator (5, 5', 81, 81') or of the handheld element (1, 80, 80'), through the fluid conducting device (4, 4', 83, 83').

11. The handheld element (1, 80, 80') according to one of the preceding Claims,
**characterized in that**
in relation to the flow direction of the drive fluid, the generator impeller (6, 6', 89, 89') is arranged upstream of the first impeller (3), so that the drive fluid can be supplied first to the generator impeller (6, 6', 89, 89') and then to the first impeller (3).

12. The handheld element (1, 80, 80') according to Claim 11, **characterized in that** the first impeller (3) is constructed as an equal pressure turbine, for example as a Pelton turbine.

13. The handheld element (1, 80, 80') according to one of the preceding Claims,
**characterized in that**
the generator (5, 5', 81, 81') comprises a rotor magnet (55, 55') which is held in a protective sleeve (73) of a non-magnetic material.

14. The handheld element (1, 80, 80') according to one of the preceding Claims,
**characterized by**
at least one friction bearing (17, 17', 18, 18') for the rotary mounting of the rotor (16, 16') of the generator (5, 5', 81, 81').

15. The handheld element (1, 80, 80') according to one of the preceding Claims,
**characterized by**
at least one spot bearing (19, 19A, 19B) for the axial mounting of the rotor (16, 16') of the generator (5, 5', 81, 81').

## Revendications

1. Elément formant pièce à main (1, 80, 80') à commande hydraulique et usage médical, en particulier dentaire, avec un dispositif de raccordement (2, 82, 82') pour relier l'élément formant pièce à main (1, 80, 80') à une source de fluide, une première roue à aubes (3) pouvant être mise en rotation par un fluide et pouvant être ou étant reliée à un outil, de sorte que l'outil peut être amené dans un mouvement de travail par la première roue à aubes (3), un générateur (5, 5', 81, 81') pour générer de l'énergie électrique, dans lequel le générateur (5, 5', 81, 81') comprend une deuxième roue à aubes (6, 6', 89, 89') pouvant être mise en rotation par un fluide, et avec un dispositif de guidage de fluide (4, 4', 83, 83') pour transporter un courant de fluide du dispositif de raccordement (2, 82, 82') aux deux roues à aubes (3; 6, 6', 89, 89'), **caractérisé par**
un agencement en série des deux roues à aubes (3; 6, 6', 89, 89') de sorte que le fluide d'entraînement pouvant être guidé dans le dispositif de guidage de fluide (4, 4', 83, 83') peut d'abord être amené à l'une des deux roues à aubes (3; 6, 6', 89, 89') et ensuite à l'autre des deux roues à aubes (3; 6, 6', 89, 89'), dans lequel la roue à aubes (6, 6', 89, 89') du générateur (5, 5', 81, 81') est réalisée comme une turbine à surpression, par exemple comme une turbine de Francis ou de Kaplan.

2. Elément formant pièce à main (1, 80, 80') selon la revendication 1, **caractérisé en ce que**
la roue à aubes (6, 6', 89, 89') du générateur (5, 5', 81, 81') est reçue entièrement dans le dispositif de guidage de fluide (4) de sorte qu'il peut être contourné entièrement par le fluide d'entraînement.

3. Elément formant pièce à main (1, 80, 80') selon la revendication 1 ou 2, **caractérisé en ce que**
le générateur (5, 5', 81, 81') tout entier est reçu dans le dispositif de guidage de fluide (4, 4', 83, 83').

4. Elément formant pièce à main (1, 80, 80') selon la revendication 3, **caractérisé en ce que**
le générateur (5, 5', 81, 81') est entouré au moins en partie d'une gaine extérieure (7) qui peut être insérée de façon amovible dans le dispositif de guidage de fluide (4, 4', 83, 83').

5. Elément formant pièce à main (1, 80, 80') selon l'une quelconque des revendications précédentes, **caractérisé en ce que**
l'élément formant pièce à main (1, 80, 80') se compose de deux parties, dans lequel respectivement une roue à aubes (6, 6', 89, 89') est disposée dans l'une des deux parties de l'élément formant pièce à main (1, 80, 80') et les deux parties de l'élément formant pièce à main (1, 80, 80') peuvent être reliées ensemble de façon amovible.

6. Elément formant pièce à main (1, 80, 80') selon la revendication 5, **caractérisé en ce que**
les deux parties de l'élément formant pièce à main (1, 80, 80') sont formées par une pièce à main ou un contre-angle et par un accouplement (80, 80') ou un adaptateur, ledit générateur (5, 5', 81, 81') étant disposé dans l'accouplement (80, 80') ou dans l'adaptateur.

7. Elément formant pièce à main (1, 80, 80') selon la revendication 6, **caractérisé en ce que**
dans l'accouplement (80, 80') ou dans l'adaptateur, un dispositif d'éclairage (96') est prévu qui est relié électriquement au générateur (5, 5', 81, 81'), ledit dispositif d'éclairage (96') présentant en particulier une diode électroluminescente.

8. Elément formant pièce à main (1, 80, 80') selon l'une quelconque des revendications précédentes, **caractérisé par**
une conduite, substantiellement axiale par rapport à l'axe longitudinal de l'élément formant pièce à main (1, 80, 80'), pour le fluide d'entraînement et passant par l'élément formant pièce à main (1, 80, 80') et un soufflage radial et/ou tangentiel de la roue à aubes de générateur (6, 6', 89, 89').

9. Elément formant pièce à main (1, 80, 80') selon la revendication 8, **caractérisé par**
un élément de guidage (14, 14') pour la déviation radiale et/ou tangentielle du courant de fluide d'entraînement vers la roue à aubes de générateur (6, 6', 89, 89').

10. Elément formant pièce à main (1, 80, 80') selon la revendication 8 ou 9, **caractérisé en ce que**
les aubes (51') de la roue à aubes de générateur (6, 6', 89, 89') sont réalisées ou façonnées de telle sorte qu'elle modifient la direction d'écoulement du fluide d'entraînement et provoquent un écoulement sortant ou continu du fluide, substantiellement axial par rapport à l'axe longitudinal du générateur (5, 5', 81, 81') ou de l'élément formant pièce à main (1, 80, 80') à travers le dispositif de guidage de fluide (4, 4', 83, 83').

11. Elément formant pièce à main (1, 80, 80') selon l'une quelconque des revendications précédentes, **caractérisé en ce que**
par rapport à la direction d'écoulement du fluide d'entraînement, la roue à aubes de générateur (6, 6', 89, 89') est disposée en amont de la première roue à aubes (3) de sorte que le fluide d'entraînement peut être amené d'abord à la roue à aubes de générateur (6, 6', 89, 89') et ensuite à la première roue à aubes (3).

12. Elément formant pièce à main (1, 80, 80') selon la revendication 11, **caractérisé en ce que**
la première roue à aubes (3) est réalisée comme une turbine à équipression, par exemple comme une roue à aubes de Pelton.

13. Elément formant pièce à main (1, 80, 80') selon l'une quelconque des revendications précédentes, **caractérisé en ce que**
le générateur (5, 5', 81, 81') comprend un aimant de rotor (55, 55') reçu dans une douille de protection (73) en matériau non magnétique.

14. Elément formant pièce à main (1, 80, 80') selon l'une quelconque des revendications précédentes, **caractérisé par**
au moins un palier à glissement (17, 17', 18, 18') pour un montage en rotation du rotor (16, 16') du générateur (5, 5', 81, 81').

15. Elément formant pièce à main (1, 80, 80') selon l'une quelconque des revendications précédentes, **caractérisé par**
au moins un appui ponctuel (19, 19A, 19B) pour un montage axial du rotor (16, 16') du générateur (5, 5', 81, 81').
